# EUROPEAN PATENT APPLICATION

(11) **EP 2 056 558 A1**
(43) Date of publication of application: **06.05.2009**
(21) Application number: 07021303.8
(22) Date of filing: 31.10.2007
(51) Int. Cl.: H04L 29/06

(54) **Server discovery in a neighbour network of an IP node**

(71) Applicant: Panasonic Corporation, Kadoma-shi Osaka 571-8501 (JP)
(72) Inventor: Weniger, Kilian, Dr., 63225 Langen (DE)
(74) Representative: Grünecker, Kinkeldey, Stockmair & Schwanhäusser Anwaltssozietät

(57) **Abstract**

The invention describes a method for discovering a server in a neighbour network of an IP node or IP network, said method comprising obtaining inter-network routing information describing a network reachability between networks, determining at least one routing path including the IP node or IP network in the inter-network routing information, selecting a first network on the determined at least one routing path, said first network being located at or close to the IP node or IP network, determining at least one first address, prefix or domain name associated with the selected first network, transmitting at least one server discovery request message for an address, prefix or domain name associated with the selected first network, and receiving at least one reply message containing an address or domain name of a server located in the selected first network, thus discovering a server in the neighbourhood of the IP node or IP network.

## Description

### FIELD OF THE INVENTION

The invention relates to service discovery in packet-based networks. The invention relates in particular to a mechanism for discovering a Home Agent at a specific location, e.g., located close to a given Internet host. This can be used, e.g., for optimized routing and location privacy support or to discover any service where the location of the service is important.

### TECHNICAL BACKGROUND

Mobile communication systems evolve more and more towards an Internet Protocol (IP)-based network. The Internet consist of many interconnected networks, in which speech and data is transmitted from one terminal to another terminal in pieces, so-called packets. Those packets are routed to the destination by routers in a connection-less manner. Therefore, packets consist of IP header and payload information and the header comprises among other things source and destination IP address. For scalability reasons, a large IP network is usually divided in subnets and uses a hierarchical addressing scheme. Hence, an IP address does not only identify the corresponding terminal, but additionally contains location information (current subnet) about this terminal. With additional information provided by routing protocols, routers in the network are able to identify the next router towards a specific destination.

If a terminal is mobile, from now on called Mobile Node (MN), and moves between subnets, it must change its IP address to a topologically correct one because of the hierarchical addressing scheme. However, since connections on higher-layers such as TCP connections are defined with the IP addresses (and ports) of the communicating nodes, the connection breaks if one of the nodes changes its IP address, e.g., due to movement.

Mobile IPv6 (see D. Johnson, C. Perkins, J. Arkko, "Mobility Support in IPv6", IETF RFC 3775, June 2004 available at http://www.ietf.org and incorporated herein by reference) is an IP-based mobility protocol that enables mobile nodes to move between subnets in a manner transparent for higher layers and applications, i.e. without breaking higher-layer connections. Therefore, a mobile node has two IP addresses configured: a Care-of-Address (CoA) and a Home Address (HoA). The mobile node's higher layers use the home address for communication with the communication partner, who is associated with the destination terminal, from now on called Corresponding Node (CN). This address does not change and serves the purpose of identification of the mobile node. Topologically, it belongs to the Home Network (HN) of the mobile node. In contrast, the Care-of-Address changes on every movement that results in a subnet change and is used as the locator for the routing infrastructure. Topologically, it belongs to the network the mobile node is currently attached to. One out of a set of Home Agents (HA) located on the home link maintains a mapping of the mobile node's Care-of-Address to the mobile node's Home Address and redirects incoming traffic for the mobile node to its current location. Reasons for having a set of home agents instead of a single HA are redundancy and load balancing.

The Dynamic Home Agent Address Discovery (DHAAD) [D. Johnson, C. Perkins, J. Arkko, "Mobility Support in IPv6", IETF RFC 3775, June 2004] assumes that the mobile node is pre-configured with the home prefix. The mobile node uses anycasting to discover an Home Agent on the home link. Anycast routing means that packets are delivered to one out of a group of destinations. The actual receiver can be the one that is closest to the sender or, if all destinations are in the same distance (as in the DHAAD case), the actual receiver can be anyone of the destinations. A mobile node constructs an anycast address by concatenating the prefix of its home network with a well-known interface identifier. It sends an ICMP DHAAD Request message to this anycast address. Besides type and code field, this message contains a checksum and an identifier field. The latter is required to enable the sender of the request to match the reply to this request. Every Home Agent on the link receives this anycast message and replies with an ICMP DHAAD Reply message, which contains, besides type, code and checksum field, a list of addresses of Home Agents on the local link. Every Home Agent knows the addresses of all other Home Agents on the local link from received Router Advertisement messages. Those messages contain the information whether the sender is a router only or can additionally serve as Home Agent. Based on the received list of Home Agent addresses in the DHAAD reply, the mobile node hence can select one of the addresses and use this as destination address for home registration messages.

An alternative Home Agent discovery mechanism based on anycast is proposed in [F. Dupont, K. Weniger, "IKEv2-based Home Agent Assignment in Mobile IPv6/NEMO Bootstrapping", draft-dupont-ikev2-haassign-02.txt, Jan 2007]. Here, the IKE_SA_INIT message sent for dynamically setting up an IPsec security association with a home agent is sent to an anycast address constructed from a pre-configured prefix and a well-known interface identifier.

Recently, Mobile IPv6 has been extended to enable mobile nodes to dynamically bootstrap with Home Agents. Two scenarios can be differentiated: In the split scenario the operator that authorizes the mobility service (Mobility Service Authorizer, MSA) is different from the operator that authorizes the network access service (Access Service Authorizer, ASA). The integrated scenario is the special case where the MSA and ASA are the same operator. The service providers are called Mobility Service Provider (MSP) and Access Service Provider (ASP), respectively. The bootstrapping mechanisms for the split and integrated scenario are documented in [G. Giaretta, J. Kempf, V. Devarapalli, "Mobile IPv6 bootstrapping in split scenario", draft-ietf-mip6-bootstrapping-split-07.txt, July 2007], and [K. Chowdhury, A. Yegin, "MIP6-bootstrapping for the Integrated Scenario", draft-ietf-mip6-bootstrapping-integrated-04.txt, June 2007], [Hee Jin Jang, A. Yegin, K. Chowdhury, J. Choi, DHCP Option for Home Information Discovery in MIPv6, draft-ietf-mip6-hiopt-06.txt, Aug 2007], respectively.

Bootstrapping includes discovering a Home Agent, setting up IPsec security associations with this Home Agent, authentication and authorization, and configuration of a Home Address. In the split scenario, the Home Agent discovery is done based on DNS. Therefore, it is assumed that the mobile node is pre-configured with the FQDN of the Home Agent, e.g., "ha1.example.com". The mobile node would then construct a DNS query with QNAME="ha1.example.com". Alternatively, the mobile node is pre-configured with the domain name of the Home Agent and uses service resource records [RFC2782]. It then constructs a DNS query with QTYPE=SRV and , e.g., QNAME="_mip6._ipv6.example.com". In the integrated scenario, the Home Agent discovery can be done using DHCP. Therefore, the mobile node sends a DHCP Information Request message with Home Network Information option containing the home domain name as target domain [Hee Jin Jang, A. Yegin, K. Chowdhury, J. Choi, DHCP Option for Home Information Discovery in MIPv6, draft-ietf-mip6-hiopt-06.txt, Aug 2007],. The DHCP of the ASP then replies with a DHCP Information Reply message containing the HA address, which it has learned before via the AAA protocol during network authentication from the MSA.

[K. Weniger, "MIPv6 Correspondent Node-Targeted Location Privacy and Optimized Routing", draft-weniger-mobopts-mip6-cnlocpriv-02, May 2007] proposes an extension to Mobile IPv6 to achieve optimized routing and at the same time hide the location of the mobile node from the correspondent node. The basic idea is that the mobile node discovers and bootstraps with a Home Agent that is located close to the correspondent node. Such Home Agent is used for optimized routing with this correspondent node and hence is called Optimized Routing Home Agent (ORHA). An important aspect is how this ORHA can be discovered.

Two options are proposed in the draft to discover the ORHA. The first option is to use DNS. The mobile node constructs the DNS query based on a well-known prefix and the domain name of the correspondent node, e.g., "ha.cndomain.com" or "_mip6._ipv6.cndomain.com". A similar approach is proposed in the international application WO 2004/104740. However, this works only if there is an ORHA deployed in the domain of the correspondent node and there is an entry in DNS with the domain name of the correspondent node pointing to this ORHA. Since the correspondent node should be a legacy, unmodified Internet host attached to some legacy ISP, this requirement is probably not fulfilled for the majority of correspondent nodes. The second option is to use DHCP-based HA discovery. In this case the MSA of the mobile node sends authorized Home Agents to the ASP during the network authentication of the mobile node and the mobile node can get a ORHA address assigned from the ASP with the DHCP protocol. However, this works only in the integrated scenario, i.e., if the MSA is equal to ASA. Furthermore, the MSA or ASP needs to maintain a table with ORHA address and close prefixes. The above-mentioned international application however does not describe how this table can be generated dynamically.

### SUMMARY OF THE INVENTION

One object of the invention is to suggest a method for dynamically discovering an address of a server that is located close to a given IP node. Another object is to suggest a method for dynamically discovering an address of such server without requiring to amend the given IP node, i.e. supporting legacy hosts.

The object of the invention is solved by the subject matter of the independent claims. Advantageous embodiments are subject to the dependent claims.

The main idea of the invention is to utilize inter-domain routing protocol information such as Autonomous System (AS) path information in the Border Gateway Protocol (BGP) [Y. Rekhter, S. Hares, "A Border Gateway Protocol 4 (BGP-4)", RFC4271, Jan 2006] to discover a home agent or other server close to a given Internet host.

First, an Autonomous System number of a corresponding node is determined based on the address or prefix of the corresponding node. A routing path that includes the Autonomous System number of the corresponding node is searched for. A routing path is selected and a first Autonomous System on the routing path is selected that is close to the Autonomous System of the corresponding node in the routing path. A prefix or domain name of the selected first Autonomous System is determined and a server discovery is performed for the determined prefix or domain name. The process is repeated until a server is found or the search is aborted.

An embodiment of the invention provides a method for discovering a server in a neighbour network of an IP node or an IP network, said method comprising the following steps, which are executed by a resolver entity:
(a) obtaining an inter-network routing information describing a network reachability between networks,
(b) determining at least one routing path including the IP node or the IP network in the inter-network routing information,
(c) selecting a first network on the determined at least one routing path, said first network being located at or close to the IP node or the IP network,
(d) determining at least one first address, prefix or domain name associated with the selected first network,
(e) transmitting at least one server discovery request message for an address, prefix or domain name associated with the selected first network, and
(f) receiving at least one reply message containing an address or domain name of a server located in the selected first network, thus discovering a server in the neighbourhood of the IP node or the IP network.

According to another embodiment of the invention, at least one of the steps (a) to (f) is repeated for further first networks until a server is discovered, all selected networks were probed or the server discovery is aborted.

According to another embodiment of the invention, the step of determining at least one routing path including the IP node or IP network comprises obtaining at least one of a first IP address or first network prefix of the IP node or IP network, matching a destination network prefix of a destination network in the inter-network routing information with the first IP address or first network prefix, and choosing at least one routing path with a destination network prefix having a longest prefix match with the first IP address or first network prefix, thereby obtaining a routing path to the IP node or IP network.

According to another embodiment of the invention, the at least one server discovery request message is transmitted to an anycast address containing a prefix of the selected first network.

According to another embodiment of the invention, the at least one server discovery request message is generated by at least one forward or reverse Domain Name Server query for a resource record associated with an IP address or domain name of the selected first network.

According to another embodiment of the invention, the inter-network routing information is a Border Gateway Protocol routing information, which comprises information on a plurality of routing paths, each routing path comprising a set of Autonomous Systems, and the selected first network is a first Autonomous System in the determined at least one routing path.

The method according to an embodiment of the invention further comprises determining an Autonomous System number of the IP node or IP network by obtaining at least one of a first IP address or first network prefix of the IP node or IP network, matching a destination network prefix of a destination network in the Border Gateway Protocol routing information with the obtained first IP address or first network prefix, choosing at least one routing path with a destination network prefix having a longest prefix match with the first IP address, and storing the last Autonomous System number of the chosen at least one routing path.

According to another embodiment of the invention, the step of determining at least one routing path including the IP node or the IP network in the Border Gateway Protocol routing information comprises searching for at least one routing path including the determined Autonomous System number of the IP node or IP network.

According to another embodiment of the invention, the selected first Autonomous System is the determined Autonomous System of the IP node or IP network.

According to another embodiment of the invention, the selected first Autonomous System is an Autonomous System next to the determined Autonomous System of the IP node or IP network on the determined at least one routing path.

According to another embodiment of the invention, an Autonomous System number is associated to each Autonomous System in the set of Autonomous Systems in a routing path, and the step of determining at least one first prefix or domain name associated with the selected first Autonomous System comprises determining at least one routing path in the Border Gateway Protocol routing information such that the Autonomous System number of the last Autonomous System in the determined at least one routing path is equal to the Autonomous System number of the selected first Autonomous System, and storing a destination prefix of the determined at least one routing path or an address of the destination prefix of the determined at least one routing path.

According to another embodiment of the invention, an Autonomous System number is associated to each Autonomous System in the set of Autonomous Systems in a routing path, and the step of determining at least one first address or domain name associated with the selected first Autonomous System comprises determining at least one routing path in the Border Gateway Protocol routing information such that the Autonomous System number of the first out of the set of Autonomous Systems in the determined at least one routing path is equal to the Autonomous System number of the selected first Autonomous System, and storing a next hop address of the determined at least one routing path.

The method according to an embodiment of the invention further comprises, if the address of the destination prefix of the determined at least one routing path or the next hop address of the determined at least one routing path is stored, sending a reverse Domain Name Server request for the stored address and storing the returned domain name.

The method according to an embodiment of the invention further comprises, in case no server could be found in the selected first network, determining a second routing path containing the Autonomous System number of the selected first Autonomous System, selecting a k-th level neighbour Autonomous System having an Autonomous System number preceding or following the Autonomous System number of the selected first Autonomous System, wherein k is an integer comprised between 1 and a predetermined maximum integer value.

According to another embodiment of the invention, the IP node or IP network communicates with a mobile node, and the determined at least one routing path including the IP node or the IP network in the Border Gateway Protocol routing information further includes an Autonomous System corresponding to a care of address of the mobile node.

According to another embodiment of the invention, the IP node is a mobile IP node communicating with the mobile node, and said method further comprises obtaining a first care-of-address of the mobile node and a second care-of-address of the mobile IP node, identifying in the Border Gateway Protocol routing information a third Autonomous System corresponding to the first care-of-address of the mobile node and a fourth Autonomous System corresponding to the second care-of-address of the mobile IP node, and determining at least one Autonomous System located between the third and fourth Autonomous System on a routing path joining the third and fourth Autonomous System with each other.

According to another embodiment of the invention, the mobile node communicates with a plurality of IP nodes, and said method further comprises identifying in the Border Gateway Protocol routing information a respective Autonomous System corresponding to each one of the plurality of IP nodes, and determining a fifth Autonomous System located in all the routing paths including all the identified Autonomous Systems of the plurality of the IP nodes.

According to another embodiment of the invention, the IP node is a corresponding node communicating with the mobile node and the server to be discovered is a home agent.

Another embodiment of the invention provides a resolver entity for discovering a server in a neighbour network of an IP node or an IP network, said resolver entity comprising obtaining means for obtaining an inter-network routing information describing a network reachability between networks, first determining means for determining at least one routing path including the IP node or the IP network in the inter-network routing information, selecting means for selecting a first network on the determined at least one routing path, said first network being located at or close to the IP node or the IP network, second determining means for determining at least one first address, prefix or domain name associated with the selected first network, transmitting means for transmitting at least one server discovery request message for an address, prefix or domain name associated with the selected first network, and receiving means for receiving at least one reply message containing an address or domain name of a server located in the selected first network, thus discovering a server in the neighbourhood of the IP node or the IP network.

Another embodiment of the invention provides a network element comprising such a resolver entity, wherein the resolver entity is located preferably in one of a Authentication Authorization Accounting server of a Mobility Service Authorizer, a Home Agent of a Mobility Service Provider or a Network Access Server of an Access Service Provider.

Another embodiment of the invention provides a mobile node comprising transmitting means for transmitting a server discovery request message to such a network element, wherein the request message contains at least one address of a correspondent node with which the mobile node communicates, and receiving means for receiving a reply message from the network element, wherein the reply message contains an address of a server located close to the correspondent node.

According to an embodiment of the invention, the server discovery request message is one of a DHCP message, DNS message, AAA message, EAP message, IKE message or DHAAD message.

Another embodiment of the invention provides a mobile node comprising such a resolver entity according to an embodiment of the invention.

Another embodiment of the invention provides a computer-readable medium storing instructions that, when executed by a processor of a network element, cause the network element to discover a server in a neighbour network of an IP node or an IP network, by
(a) obtaining an inter-network routing information describing a network reachability between networks,
(b) determining at least one routing path including the IP node or the IP network in the inter-network routing information,
(c) selecting a first network on the determined at least one routing path, said first network being located at or close to the IP node or the IP network,
(d) determining at least one first address, prefix or domain name associated with the selected first network,
(e) transmitting at least one server discovery request message for an address, prefix or domain name associated with the selected first network, and
(f) receiving at least one reply message containing an address or domain name of a server located in the selected first network, thus discovering a server in the neighbourhood of the IP node or the IP network.

Another embodiment of the invention a computer-readable medium storing instructions that, when executed by a processor of a mobile node, cause the mobile node to discover a server in a neighbour network of an IP node or an IP network, by:
(a) obtaining an inter-network routing information describing a network reachability between networks,
(b) determining at least one routing path including the IP node or the IP network in the inter-network routing information,
(c) selecting a first network on the determined at least one routing path, said first network being located at or close to the IP node or the IP network,
(d) determining at least one first address, prefix or domain name associated with the selected first network,
(e) transmitting at least one server discovery request message for an address, prefix or domain name associated with the selected first network, and
(f) receiving at least one reply message containing an address or domain name of a server located in the selected first network, thus discovering a server in the neighbourhood of the IP node or the IP network.

### BRIEF DESCRIPTION OF THE FIGURES

In the following, the invention is described in more detail in reference to the attached figures and drawings. Similar or corresponding details in the figures are marked with the same reference numerals.
- **Figure 1**: shows an example of a Border Gateway Protocol routing table;
- **Figure 2**: shows a flow-chart explaining a method for discovering a server in a neighbourhood of a given IP node according to an embodiment of the invention;
- **Figure 3**: shows a first scenario with a server located in the domain of the corresponding node; and
- **Figure 4**: shows a second scenario with a server located in a domain close to the domain of the corresponding node.

### DETAILED DESCRIPTION OF THE INVENTION

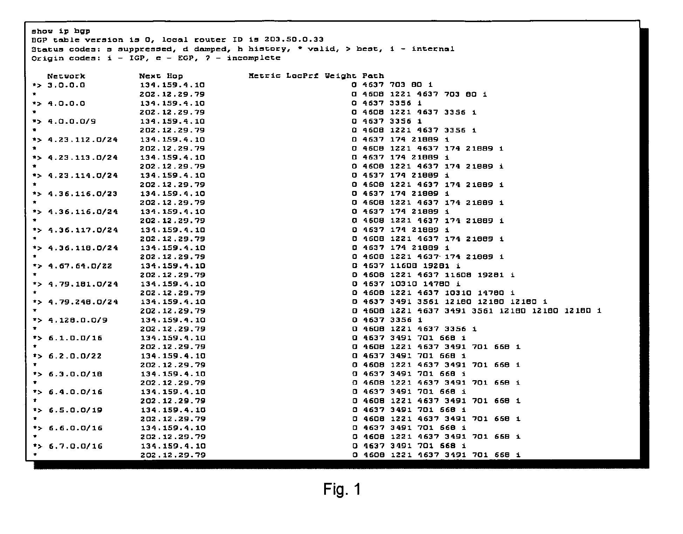

Before describing the invention in detail with respect to Figures 1 to 4 in the following, the definitions of some terms will be given.

The main idea is to utilize inter-domain routing protocol information to discover a home agent close to a given Internet host. In one embodiment, Autonomous System (AS) path information in the Border Gateway Protocol (BGP) [Y. Rekhter, S. Hares, "A Border Gateway Protocol 4 (BGP-4)", RFC4271, Jan 2006] is used to discover a home agent close to a given corresponding node. BGP is the core routing protocol of the Internet. It is a path-vector routing protocol, considering not only link and distance metrics, but also network policies and rule sets.

An autonomous system (AS) is herein defined, according to RFC4271, as a set of routers under a single technical administration domain, using an interior gateway protocol (IGP) and common metrics to determine how to route packets within the autonomous system, and using an inter-autonomous system routing protocol to determine how to route packets to other autonomous systems. Since this classic definition was developed, it has become common for a single autonomous system to use several IGPs and sometimes several sets of metrics within an autonomous system. The use of the term autonomous system stresses the fact that, even when multiple IGPs and metrics are used, the administration of an autonomous system appears to other autonomous systems to have a single coherent interior routing plan, and presents a consistent picture of the destinations that are reachable through it.

Embodiments of the invention will be described that are such that a corresponding node does not need to be changed, thereby allowing to discover a server close to a corresponding node, which can be an unchanged legacy Internet host. Furthermore, the invention is not limited to discovering home agent services. Instead, any type of service can be discovered using the methods described in the invention that is discoverable with DNS or anycast.

In the following, the entity that is aimed at discovering the home agent is named Resolver Entity (RE). The Resolver Entity is a logical function and can be located in the network, e.g., in the Authentication Authorization Accounting (AAA) server of the MSA, in the home agent in the MSP, in the Network Access Server (NAS) of the ASP. Alternatively, the Resolver Entity may be located in the mobile node. The discovery process by the Resolver Entity can be triggered by various means, e.g., by the network or by the mobile node and in a proactive manner or in a reactive manner when a session with a corresponding node is initiated. The network could be triggered by a DNS-, anycast- or DHCP-based home agent discovery try.

For instance, a Resolver Entity in the network could start the discovery procedure once the mobile node sends a DHCP Information Request message with Home Network Information option, which contains the domain of the corresponding node as target domain [Hee Jin Jang, A. Yegin, K. Chowdhury, J. Choi, DHCP Option for Home Information Discovery in MIPv6, draft-ietf-mip6-hiopt-06.txt, Aug 2007].

In one embodiment, the mobile node uses a AAA or EAP or IKE request message, a DNS request message or a DHAAD request message to trigger the Resolver Entity in the network to initiate the discovery process. The used message can be modified to include the correspondent node's IP address, prefix or domain name or, alternatively, the correspondent node's IP address, prefix or domain name could be obtained from monitoring the data traffic. A AAA or EAP or IKE reply message, a DNS reply message or a DHAAD reply message could contain the discovered home agent address or domain name.

It is assumed that the Resolver Entity has access to a current BGP routing table of the Internet. This can be realized by directly accessing the routing table of a BGP router located in the same or in a different domain than the Resolver Entity or by downloading the BGP routing table from some router in the domain. An alternative way to get access to a BGP routing table is to download the BGP routing table from Looking Glass Servers, e.g., from the ones publicly accessible in the Internet (e.g., on http://lg.de-cix.net/cgi-bin/index.cgior http://stats.eurorings.net/performance/lookingglass.html).

An example of a part of a BGP routing table, for the particular case of IPv4, is shown in Fig. 1. The first column "Network" denotes the IP address prefix of the destination. The second column "Next Hop" denotes the next hop router, to which packets destined to the corresponding destination prefix are sent to. The next relevant column is the sixth column, which represents the Autonomous System path to the destination prefix. For example, a packet to the network 3.0.0.0 needs to be sent to the next hop 134.159.4.10 and traverse the Autonomous Systems 4637, 703, and 80. An alternative route is through the Autonomous Systems 4608, 1221, 4637, 703, 80 with the next hop router being 202.12.29.79.

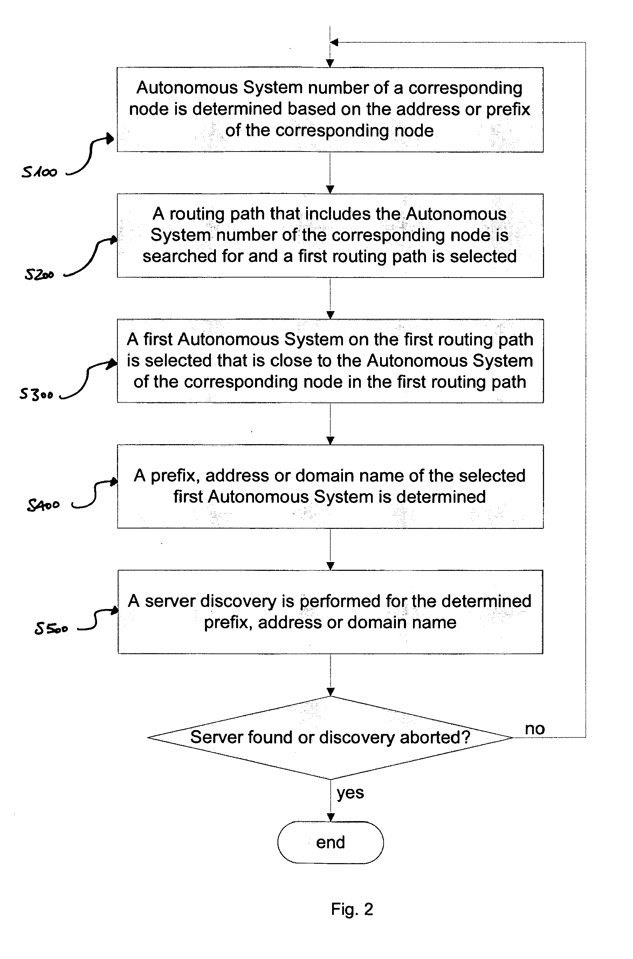

A mechanism for discovering a home agent close to a given IP node according to an embodiment of the invention comprises several steps, which will be outlined in Fig. 2 and described in the following. Even though the steps of the method will be described in a particular order, these steps may also be executed in a different order than described herein and some steps may be omitted.

In a first step, referred to as S100 in Fig. 2, the Autonomous System number of the target Internet host is discovered. This can be done by searching in the BGP routing table for a row with a destination prefix that has the longest prefix match with the address of the corresponding node. If the Resolver entity only knows the domain name of the corresponding node, it can discover the address of the corresponding node using DNS. If such row is found, the last Autonomous System number of the Autonomous System path represents the Autonomous System number of the corresponding node. The Resolver Entity stores Autonomous System number, next hop, and destination prefix. If such row is not found, the destination is not a reachable IP node.

In a second step S200, a routing path including the obtained Autonomous System number of the corresponding node is searched for and a first routing path is selected. Then, in a third step S300, a first Autonomous System on the first routing path is selected, which is close to the Autonomous System of the corresponding node. A prefix, address or domain name of the selected first Autonomous System is then determined in a fourth step S400, before a server discovery is then performed for the determined prefix, address or domain name. The process may be repeated until a server is found or the search is aborted.

From the step S100, the Resolver Entity already knows at least one prefix of the Autonomous System of the corresponding node. According to a preferred embodiment of the invention, the Resolver Entity can increase the probability to find a home agent by discovering more prefixes of the Autonomous System of the corresponding node and performing a home agent discovery for those prefixes. Therefore, the Resolver Entity searches for rows in the BGP routing table that have the Autonomous System number of the corresponding node as last entry in the Autonomous System path. The corresponding destination prefixes are all prefixes of the Autonomous System of the corresponding node, which the Resolver Entity can store.

In another embodiment, the Resolver Entity searches for rows in the BGP routing table that have the Autonomous System number of the corresponding node as the first entry in the Autonomous System path. The next hop address is an address of an IP node of the correspondent node's Autonomous System, which the Resolver Entity can store.

In the step S500, the Resolver Entity first searches for a Home Agent in the Autonomous System of the corresponding node using the discovered prefix, domain name, and address information. This can be done in various ways. One way is to adapt one of the anycast-based Home Agent discovery as defined in [F. Dupont, K. Weniger, "IKEv2-based Home Agent Assignment in Mobile IPv6/NEMO Bootstrapping", draft-dupont-ikev2-haassign-02.txt, Jan 2007] [D. Johnson, C. Perkins, J. Arkko, "Mobility Support in IPv6", IETF RFC 3775, June 2004]. The Resolver Entity constructs the anycast address based on a prefix discovered in the previous steps. If no home agent is found for a specific prefix, the discovery is repeated with another prefix. The Resolver Entity could also try sub-prefixes of the prefixes (e.g., "64.2.x.0" of the prefix "62.2.0.0" with x=1,2,3,...254). Once a home agent is found, the discovery procedure can be terminated.

Another way is to adapt the DNS-based HA discovery [G. Giaretta, J. Kempf, V. Devarapalli, "Mobile IPv6 bootstrapping in split scenario", draft-ietf-mip6-bootstrapping-split-07.txt, July 2007]. The Resolver Entity constructs the DNS query based on a well-known prefix (e.g., "_mip6._ipv6." Or "ORHA") and the domain name of the corresponding node, e.g., "_mip6._ipv6.cndomain.com" or "_mip6._ipv6.CNdomain.com". Alternatively, the MSA of the mobile node may maintain DNS entries for home agents, e.g., "CNdomain. MSAdomain.com" or the prefix of the corresponding node is used instead of the domain name of the corresponding node, e.g., "0.2.2.64.MSAdomain.com". Alternatively, the address of the next hop router may be used. Domain names for the corresponding node can be obtained by reverse DNS queries done for the prefixes or addresses of the next hop router discovered in the previous steps. If no home agent is found for a specific prefix, address of a next hop router, or domain name, the discovery is repeated with the next prefix, address of a next hop router, or domain name. Once a home agent is found, the discovery procedure can be terminated.

If no home agent can be found in the Autonomous System of the corresponding node, the Resolver Entity then proceeds to search for a home agent in neighboring Autonomous Systems. Therefore, the Resolver Entity must identify Autonomous Systems that are neighbors of the Autonomous System of the corresponding node and search in those Autonomous Systems using the methods described above. Neighbor Autonomous Systems can be found by searching for a row in the routing table containing the Autonomous System number of the corresponding node in the Autonomous System path. The Autonomous System before the Autonomous System of the corresponding node or the Autonomous System after the Autonomous System of the corresponding node in the Autonomous System path are neighbour Autonomous Systems of the Autonomous System of the corresponding node.

If no home agent can be found in the neighbouring Autonomous Systems, the Resolver Entity may search for other neighbour Autonomous Systems using BGP routing tables from routers located in other domains or Autonomous Systems. Furthermore, the Resolver Entity may search for Home agents in second-level, third-level, etc. neighbour Autonomous Systems, which can be discovered analogously to the first-level neighbour Autonomous Systems. The Resolver Entity would thus pick the second, third etc Autonomous System number next to the Autonomous System number of the correspondent node in the Autonomous System path.

In another embodiment of the invention, the Resolver Entity may also search for an Autonomous System that is not necessarily close to the corresponding node, but close to the direct path between the mobile node and corresponding node. This ensures optimized routing while still ensuring some level of location privacy (although a lower level). Also, if the routing table the Resolver Entity uses is from a different domain than the one where the mobile node is currently located, the mobile node's current Autonomous System should be considered in the discovery process. Therefore, the Resolver Entity would first identify the Autonomous System number of the Care-of-Address of the mobile node by searching for the longest destination prefix match entry in the routing table and picking the last Autonomous System number in the path. It then searches for a row in the routing table that contains both Autonomous System number of the mobile node and corresponding node. The Resolver Entity would then use the methods described above to search for an Home Agent in one of the Autonomous Systems in between the Autonomous System number of the mobile node and corresponding node in the Autonomous System path. If no such Autonomous System path is found or no home agent is found in these Autonomous Systems, the Resolver Entity can search for two Autonomous System paths, one of which contains the Autonomous System of the mobile node and the other the Autonomous System of the corresponding node, with both Autonomous System paths having a common Autonomous System number. This Autonomous System number would then be located in between the Autonomous System of the mobile node and the Autonomous System of the corresponding node.

Such method can also be used to find an optimal path in case the corresponding node is mobile. If the Resolver Entity knows the Care-of-Addresses of both mobile node and corresponding node, it can identify the corresponding Autonomous System numbers and find a home agent in an Autonomous System located in between both Autonomous Systems. This ensures optimized routing for the case of a mobile corresponding node and location privacy in both directions. If the mobile node and/or corresponding node have moved, the Resolver Entity may again optimize the route and search again for a better home agent located in between the two new Care-of-Addresses.

As an optimization in scenarios where the mobile node wants to optimize the route to multiple corresponding nodes, the Resolver Entity may want to discover a home agent that is close to all of these corresponding nodes. In this case, the mobile node only needs to be registered with a single home agent to achieve optimized routing with many corresponding nodes. This can be achieved by extending the methods described above to find a home agent that is close to the Autonomous Systems of several corresponding nodes, e.g., by searching for an Autonomous System that is part of all Autonomous System paths containing the Autonomous Systems of all the corresponding nodes.

In general, before the Resolver Entity searches for a home agent in a particular Autonomous System, the Resolver Entity may check whether the MSA of the mobile node has a trust relationship to that Autonomous System. If no relationship exist, the Resolver Entity does not need to search for a home agent in this Autonomous System, since the mobile node cannot bootstrap with this home agent anyway.

Even though the description of the embodiments above has focused on the discovery of a home agent close to a given IP host, the methods described herein may also be applied to the discovery of any service provided by a server, e.g. a SIP server, printing server, or a router, e.g. a correspondent router for NEMO route optimization, that is discoverable via prefix or domain name information, e.g., via DNS or anycast. The corresponding node can be any legacy Internet host and does not necessarily implement the role of a Mobile IP corresponding node.

Since BGP routers in different Autonomous Systems have different views of the topology, it may make sense to repeat the procedures described in the embodiments of the invention with routing tables from different BGP routers, if no home agent can be found with a specific BGP routing table.

If a home agent close to a specific corresponding node prefix is found, the Resolver Entity should cache the result and use it in future queries to speed up the process. If the Resolver Entity is located in the network, it could also automatically add DNS entries for the discovered prefixes, e.g. "0.2.2.64.MSAdomain.com" or "CNdomain.MSAdomain.com", so that mobile nodes only need to query DNS to discover a home agent close to a corresponding node prefix.

Furthermore, Autonomous Systems or MSPs may want to configure special DNS entries for their home agents, so that they can be more easily discovered by the Resolver Entity, e.g., a reverse DNS-entry per destination prefix in the routing table or a DNS-entry per Autonomous System such as "HA.asXYZ.com".

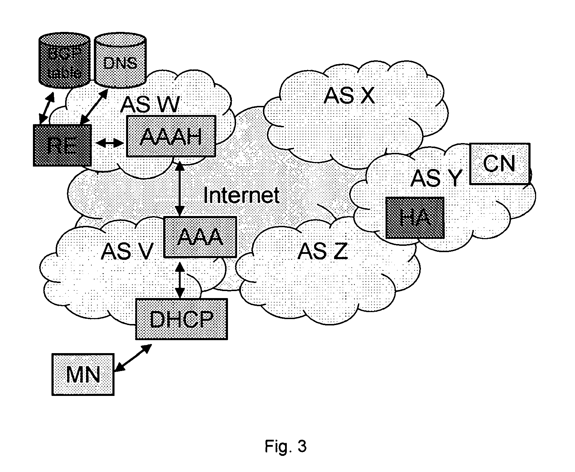

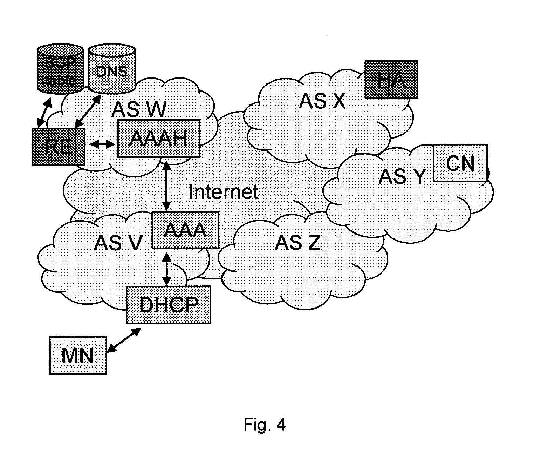

Two exemplary scenarios will now be described with respect to Figs. 3 and 4.

In the first example scenario, which is described in Fig. 3, a home agent is located in the domain of the corresponding node, referred to as Autonomous System AS Y. The mobile node tries to discover a home agent using DHCP-based home agent discovery [K. Chowdhury, A. Yegin, "MIP6-bootstrapping for the Integrated Scenario", draft-ietf-mip6-bootstrapping-integrated-04.txt, June 2007]. Therefore, the mobile node sends a DHCP Information request containing the corresponding node's domain as target domain. In this example, the mobile node's MSA, which is located on the Autonomous System AS W, is responsible for discovering the ORHA and hence implements the logical entity of the Resolver Entity (RE).

The procedure performed at the Resolver Entity is as follows:

Assuming the corresponding node's address is 38.103.130.1, the Resolver Entity searches for the relevant entries in the BGP table and finds in the BGP routing table, which has a similar format to that shown in Fig. 1:

| Network | Next Hop | Path |
|---|---|---|
| *> 38.103.130.0/24 | 134.159.4.10 | 0 4637 174 i |
| *> | 202.12.29.79 | 0 4608 1221 4637 174 i |

The prefix which has the longest match with the corresponding node's address is 38.103.130.0/24. The corresponding node's Autonomous System number, i.e. the Autonomous System number of AS Y, is the last Autonomous System number in the Autonomous System path, i.e. 174.

The Resolver Entity then searches for other prefixes including the Autonomous System number 174 as last element in the Autonomous System path. The relevant BGP table entries are, for example:

| Network | Next Hop | Path |
|---|---|---|
| *> 24.238.0.0/24 | 134.159.4.10 | 0 4637 174 i |
| *> | 202.12.29.79 | 0 4608 1221 4637 174 i |
| *> 38.0.0.0 | 134.159.4.10 | 0 4637 174 i |
| *> | 202.12.29.79 | 0 4608 1221 4637 174 i |

Other found prefixes are 24.248.0.0/24 and 38.0.0.0. Consequently, the Resolver Entity searches for a home agent in 24.248.0.0/24, 38.0.0.0 and 38.103.130.0/24.

The home agent discovery may be performed e.g., using an anycast address constructed from those prefixes (DHAAD or IKE anycast), or using a reverse DNS lookup, e.g., using http://www.dnsstuff.com/. The result of this reverse DNS lookup is "coxmail.com", "cogentco.com ", "psi.net". The Resolver Entity then queries DNS for discovering a home agent (e.g., for "_mip6._ipv6.coxmail.com").

In the second example scenario, which is shown with respect to Fig. 4, no home agent is located in the corresponding node's Autonomous System AS Y. Instead, a home agent is located in a neighbour domain, which is referred to as AS X.

The mobile node tries to discover a home agent using DHCP-based home agent discovery [K. Chowdhury, A. Yegin, "MIP6-bootstrapping for the Integrated Scenario", draft-ietf-mip6-bootstrapping-integrated-04.txt, June 2007]. Therefore, the mobile node sends a DHCP Information request containing the corresponding node's domain as target domain. In this example, the mobile node's MSA, which is located in the Autonomous System AS W, is responsible for discovering the ORHA and hence implements the logical entity of the Resolver Entity (RE).

It is assumed that the Resolver Entity already knows that there is no home agent in the corresponding node's domain, e.g., because the Resolver Entity tried the discovery as described in the previous section, but could not find a home agent in the corresponding node's domain.

The procedure performed at the Resolver Entity is as follows:

The Resolver Entity searches the BGP table for entries with the corresponding node's Autonomous System number 174 and finds:

| Network | Next Hop | Path |
|---|---|---|
| *> 38.103.130.0/24 | 134.159.4.10 | 0 4637 174 i |
| *> | 202.12.29.79 | 0 4608 1221 4637 174 i |

A neighbor Autonomous System is the Autonomous System 4637 (AS X), since it is adjacent to the corresponding node's Autonomous System 174 in the Autonomous System path.

The Resolver Entity searches for prefixes in the Autonomous System 4637 by searching for entries in the BGP table that have 4637 as the last Autonomous System number in the Autonomous System path. The Resolver Entity then searches for a home agent in the identified prefixes, e.g., using an anycast address constructed from those prefixes (DHAAD or IKE anycast) or using a reverse DNS lookup, e.g., using http://www.dnsstuff.com/.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

## Claims

1. A method for discovering a server in a neighbour network of an IP node (X) or an IP network (Y), said method comprising the following steps, which are executed by a resolver entity:
(a) obtaining an inter-network routing information describing a network reachability between networks,
(b) determining at least one routing path including the IP node (X) or the IP network (Y) in the inter-network routing information,
(c) selecting a first network on the determined at least one routing path, said first network being located at or close to the IP node (X) or the IP network (Y),
(d) determining at least one first address, prefix or domain name associated with the selected first network,
(e) transmitting at least one server discovery request message for an address, prefix or domain name associated with the selected first network, and
(f) receiving at least one reply message containing an address or domain name of a server located in the selected first network, thus discovering a server in the neighbourhood of the IP node (X) or the IP network (Y).

2. The method according to claim 1, further comprising repeating at least one of the steps (a) to (f) for further first networks until a server is discovered, all selected networks were probed or the server discovery is aborted.

3. The method according to claim 1 or 2, wherein the step of determining at least one routing path including the IP node (X) or IP network (Y) comprises:
obtaining at least one of a first IP address or first network prefix of the IP node (X) or IP network (Y),
matching a destination network prefix of a destination network in the inter-network routing information with the first IP address or first network prefix, and
choosing at least one routing path with a destination network prefix having a longest prefix match with the first IP address or first network prefix, thereby obtaining a routing path to the IP node (X) or IP network (Y).

4. The method according to one of claims 1 to 3, wherein the at least one server discovery request message is transmitted to an anycast address containing a prefix of the selected first network.

5. The method according to one of claims 1 to 3, wherein the at least one server discovery request message is generated by at least one forward or reverse Domain Name Server query for a resource record associated with an IP address or domain name of the selected first network.

6. The method according to one of claims 1 to 5, wherein the inter-network routing information is a Border Gateway Protocol routing information, which comprises information on a plurality of routing paths, each routing path comprising a set of Autonomous Systems, and the selected first network is a first Autonomous System in the determined at least one routing path.

7. The method according to claim 6, further comprising determining an Autonomous System number of the IP node (X) or IP network (Y) by:
obtaining at least one of a first IP address or first network prefix of the IP node (X) or IP network (Y),
matching a destination network prefix of a destination network in the Border Gateway Protocol routing information with the obtained first IP address or first network prefix,
choosing at least one routing path with a destination network prefix having a longest prefix match with the first IP address, and
storing the last Autonomous System number of the chosen at least one routing path.

8. The method according to claim 7, wherein the step of determining at least one routing path including the IP node (X) or the IP network (Y) in the Border Gateway Protocol routing information comprises searching for at least one routing path including the determined Autonomous System number of the IP node (X) or IP network (Y).

9. The method according to claim 7 or 8, wherein the selected first Autonomous System is the determined Autonomous System of the IP node (X) or IP network (Y).

10. The method according to claim 7 or 8, wherein the selected first Autonomous System is an Autonomous System next to the determined Autonomous System of the IP node (X) or IP network (Y) on the determined at least one routing path.

11. The method according to one of claims 6 to 10, wherein an Autonomous System number is associated to each Autonomous System in the set of Autonomous Systems in a routing path, and the step of determining at least one first prefix or domain name associated with the selected first Autonomous System comprises:
determining at least one routing path in the Border Gateway Protocol routing information such that the Autonomous System number of the last Autonomous System in the determined at least one routing path is equal to the Autonomous System number of the selected first Autonomous System, and
storing a destination prefix of the determined at least one routing path or an address of the destination prefix of the determined at least one routing path.

12. The method according to one of claims 6 to 10, wherein an Autonomous System number is associated to each Autonomous System in the set of Autonomous Systems in a routing path, and the step of determining at least one first address or domain name associated with the selected first Autonomous System comprises:
determining at least one routing path in the Border Gateway Protocol routing information such that the Autonomous System number of the first out of the set of Autonomous Systems in the determined at least one routing path is equal to the Autonomous System number of the selected first Autonomous System, and
storing a next hop address of the determined at least one routing path.

13. The method according to claim 11 or 12, further comprising, if the address of the destination prefix of the determined at least one routing path or the next hop address of the determined at least one routing path is stored, sending a reverse Domain Name Server request for the stored address and storing the returned domain name.

14. The method according to one of claims 6 to 13, further comprising, in case no server could be found in the selected first network:
determining a second routing path containing the Autonomous System number of the selected first Autonomous System,
selecting a k-th level neighbour Autonomous System having an Autonomous System number preceding or following the Autonomous System number of the selected first Autonomous System, wherein k is an integer comprised between 1 and a predetermined maximum integer value.

15. The method according to one of claims 8 to 14, wherein the IP node (X) or IP network (Y) communicates with a mobile node (MN), and the determined at least one routing path including the IP node (X) or the IP network (Y) in the Border Gateway Protocol routing information further includes an Autonomous System corresponding to a care of address of the mobile node (MN).

16. The method according to claim 15, wherein the IP node (X) is a mobile IP node communicating with the mobile node (MN), and said method further comprises:
obtaining a first care-of-address of the mobile node (MN) and a second care-of-address of the mobile IP node (X),
identifying in the Border Gateway Protocol routing information a third Autonomous System corresponding to the first care-of-address of the mobile node (MN) and a fourth Autonomous System corresponding to the second care-of-address of the mobile IP node (X), and
determining at least one Autonomous System located between the third and fourth Autonomous System on a routing path joining the third and fourth Autonomous System with each other.

17. The method according to claim 15 or 16, wherein the mobile node (MN) communicates with a plurality of IP nodes (X), and said method further comprises:
identifying in the Border Gateway Protocol routing information a respective Autonomous System corresponding to each one of the plurality of IP nodes (X), and
determining a fifth Autonomous System located in all the routing paths including all the identified Autonomous Systems of the plurality of the IP nodes (X).

18. The method according to one of claims 15 to 17, wherein the IP node (X) is a corresponding node (CN) communicating with the mobile node (MN) and the server to be discovered is a home agent.

19. A resolver entity for discovering a server in a neighbour network of an IP node (X) or an IP network (Y), said resolver entity comprising:
obtaining means for obtaining an inter-network routing information describing a network reachability between networks,
first determining means for determining at least one routing path including the IP node (X) or the IP network (Y) in the inter-network routing information,
selecting means for selecting a first network on the determined at least one routing path, said first network being located at or close to the IP node (X) or the IP network (Y),
second determining means for determining at least one first address, prefix or domain name associated with the selected first network,
transmitting means for transmitting at least one server discovery request message for an address, prefix or domain name associated with the selected first network, and
receiving means for receiving at least one reply message containing an address or domain name of a server located in the selected first network, thus discovering a server in the neighbourhood of the IP node (X) or the IP network (Y).

20. The resolver entity according to claim 19, further comprising means adapted to perform the method according to one of claims 2 to 18.

21. A network element comprising the resolver entity according to claim 19 or 20, wherein the resolver entity is located preferably in one of a Authentication Authorization Accounting server of a Mobility Service Authorizer, a Home Agent of a Mobility Service Provider or a Network Access Server of an Access Service Provider.

22. A mobile node comprising:
transmitting means for transmitting a server discovery request message to a network element according to claim 21, wherein the request message contains at least one address of a correspondent node with which the mobile node communicates, and
receiving means for receiving a reply message from the network element, wherein the reply message contains an address of a server located close to the correspondent node.

23. The mobile node according to claim 22, wherein the server discovery request message is one of a DHCP message, DNS message, AAA message, EAP message, IKE message or DHAAD message.

24. A mobile node comprising the resolver entity according to claim 19 or 20.

25. A computer-readable medium storing instructions that, when executed by a processor of a network element, cause the network element to discover a server in a neighbour network of an IP node (X) or an IP network (Y), by:
(a) obtaining an inter-network routing information describing a network reachability between networks,
(b) determining at least one routing path including the IP node (X) or the IP network (Y) in the inter-network routing information,
(c) selecting a first network on the determined at least one routing path, said first network being located at or close to the IP node (X) or the IP network (Y),
(d) determining at least one first address, prefix or domain name associated with the selected first network,
(e) transmitting at least one server discovery request message for an address, prefix or domain name associated with the selected first network, and
(f) receiving at least one reply message containing an address or domain name of a server located in the selected first network, thus discovering a server in the neighbourhood of the IP node (X) or the IP network (Y).

26. The computer-readable medium according to claim 25, further storing instructions that, when executed by the processor of the network element cause the network element to perform the steps of the method according to one of claims 2 to 18.

27. A computer-readable medium storing instructions that, when executed by a processor of a mobile node, cause the mobile node to discover a server in a neighbour network of an IP node (X) or an IP network (Y), by:
(a) obtaining an inter-network routing information describing a network reachability between networks,
(b) determining at least one routing path including the IP node (X) or the IP network (Y) in the inter-network routing information,
(c) selecting a first network on the determined at least one routing path, said first network being located at or close to the IP node (X) or the IP network (Y),
(d) determining at least one first address, prefix or domain name associated with the selected first network,
(e) transmitting at least one server discovery request message for an address, prefix or domain name associated with the selected first network, and
(f) receiving at least one reply message containing an address or domain name of a server located in the selected first network, thus discovering a server in the neighbourhood of the IP node (X) or the IP network (Y).

28. The computer-readable medium according to claim 27, further storing instructions that, when executed by the processor of the mobile node cause the mobile node to perform the steps of the method according to one of claims 2 to 18.
